# EUROPEAN PATENT APPLICATION

(11) **EP 1 106 135 A1**
(43) Date of publication of application: **13.06.2001**
(21) Application number: 99901882.3
(22) Date of filing: 27.01.1999
(51) Int. Cl.: A47L 23/22

(54) **SHOES WIPING MAT**

(30) Priority: 27.01.1998 JP 5122498
(71) Applicant: S.C.JOHNSON COMMERCIAL MARKETS, INC., Sturtevant, Wisconsin 53177-0902 (US)
(72) Inventor: KINIWA, Hideaki, Johnson Prof. Co., Ltd., Naka-ku, Yokohama-shi, Kanagawa 231-8691 (JP)
(74) Representative: Jones, Alan John
(86) International application number: JP9900334
(87) International publication number: WO9937201

(57) **Abstract**

A base mat is placed at a predetermined place such as a gateway to a kitchen or the like, and a dirt absorbing sheet is placed on a surface of the recessed portion of the base mat. The dirt absorbing sheet has a two-layer structure in which a nonwoven fabric of an upper layer and a plastic film of a lower layer having a smaller area than the nonwoven fabric are laminated, and a hook-and-loop fastener provided on the surface of the recessed portion of the base mat is caused to come into contact with the nonwoven fabric portion on which no plastic film is laminated, a footwear base with the sheet fixed is obtained. In this shoes wiping mat, the base mat is not made dirty even if the shoes wiping mat absorbs liquid dirt, and yet there is no possibility that the absorbing sheet moves on the base mat, and rumples are caused.

## Description

### Technical Field

The present invention relates to a shoes wiping mat placed at a gateway or the like to a kitchen, a factory or the like for use, and more particularly to a shoes wiping mat having a dirt-absorbing sheet capable of reliably absorbing dirty water, oil, their mixture and the like adhering to the periphery or the back surfaces of shoes and being easily replaced, placed on the upper surface of trodden surface of a base mat.

### Background Art

At gateways to kitchens of restaurants, Chinese restaurants or the like, or at gateways to mechanical repair shops or the like, there are placed so-called shoes wiping mats in order to remove oil, dirt (mud water, dust, etc.) or the like adhering to the back surfaces of shoes which operators are wearing. At the above-described places, operators who are wearing shoes, to whose back surfaces oil or the like adhere, come in and out at frequent intervals unlike at gateways to buildings such as ordinary office buildings and therefore, the adsorption and absorption of the dirt could not be sufficiently performed with ordinary shoes wiping mats. Also, mats having been used and become dirty may be usually cleaned for re-use, but since the dirt adheres firmly, the cleaning is an awful job, and the durability also deteriorates because of hard cleaning. Furthermore, taking off, collection and clean of mats used and, re-supply and re-mount of new mats are needed for suppliers much expense in time and effort, and the replacement fee per mat is to become expensive. As a result, when a saving of the replacement fee is taken into consideration, the period of use will be extended to one or two weeks, and the mat itself will become dirtier. Therefore, the original object of the mat to remove the dirt has not accomplished, and the situation that the dirt of the mat shifts to other portions has occurred.

In order to avoid such a situation, various ways have been worked out so far. As one example of these ways, there has been proposed a shoes wiping mat capable of easily replacing only the trodden surface of the shoes wiping mat while sufficiently removing dirt from the footwear (Japanese Utility Model Application Laid-Open No. 63-150669). This shoes wiping mat comprises a cushion mat whose surface is wrapped up with a nonwoven fabric capable of absorbing dirt and being replaced, placed on the recessed portion of a square base mat having a ridge portion formed over the entire circumference of the outer peripheral edge thereof, and when the nonwoven fabric becomes very dirty, the nonwoven fabric can be removed from the cushion mat and replaced with a new nonwoven fabric. Although, however, it can exhibit a sufficient function as a disposable shoes wiping mat, the shoes wiping mat has the following several inconvenience:
1) Since the one obtained by wrapping up the cushion mat from the surface to the back surface with the nonwoven fabric is placed on the base mat, it is troublesome to replace the nonwoven fabric.
2) Since the nonwoven fabric cannot be fixed on the surface of the cushion, it may move on the cushion to cause rumples on the surface.
3) Since the configuration is arranged such that a mat for a weight with a cushion attached is wrapped up with the nonwoven fabric, the mat for a weight with a cushion attached is required.

As a mat to overcome this defect, there has been proposed a shoes wiping mat characterized in that a frame is formed on the periphery of the base mat, there is provided a movement-inhibitor on the recessed portion of the base mat surrounded with this frame, and a dirt-absorbing sheet capable of absorbing oil or dirt is placed on the upper surface of this movement-inhibitor (Japanese Patent Application Laid-Open No. 8-531). In this invention, once the absorbing sheet has been placed, the sheet does not move, rumples hardly occur, and it has the effect in its own way. However, it has the defect for such liquid dirt such as dirty water, oil or their mixture that the dirt passes through the absorbing sheet to make the base mat dirty, and when replaced with a new absorbing sheet, the dirt remaining on the base mat makes a new absorbing sheet dirty.

### Disclosure of the Invention

An object of the present invention is to provide a shoes wiping mat in which an absorbing sheet which does not make the base mat dirty but absorbs dirt even if it absorbs liquid dirt is fixed so as not to move on the base mat or not to cause any rumples.

The present invention provides a shoes wiping mat in which a frame is provided on and around a base mat and a dirt absorbing sheet (hereinafter, abbreviated as "sheet") is placed on a recessed portion of the base mat formed by the frame, wherein the sheet has a laminated structure in which a nonwoven fabric is provided for an upper layer and a plastic film having a smaller area than the nonwoven fabric is provided for a lower layer, and a hook-and-loop fastener provided for the surface of the recessed portion of the base mat is caused to come into contact with the nonwoven fabric portion of the sheet on which no plastic film is laminated, to fix the dirt absorbing sheet to the base mat.

The base mat may preferably be formed by flexible rubber material such as representatively nitrile rubber, and may be further preferably provided with slip-proof patterns on the back surface. The base mat may have a size of 0.2 to 4 m² and may be rectangular or square. In its outer peripheral portion, a frame is formed, and a hook-and-loop fastener is caused to adhere onto the surface of the recessed portion along the inside of the frame. The ratio of area of the hook-and-loop fastener to area of the surface of the recessed portion is 1 to 20%, more preferably 2 to 5%. Also, the hook-and-loop fastener may be provided at an arbitrary position on the base mat, and may be preferably provided at least on two sides opposite to each other of the four sides on the surface of the recessed portion usually.

The sheet placed on the surface of the recessed portion has a laminated structure of an upper layer and a lower layer, and the upper layer is made of a nonwoven fabric. As the nonwoven fabric, there may be used a fabric made of synthetic fiber such as polypropylene and polyester, natural fiber such as cotton, wool, pulp and rayon, or a fabric made of a composite consisting of those materials. The fabric capable of being sufficiently fixed with hook-and-loop fastener may be preferable. Also, depending upon the purpose, a nonwoven fabric which is subjected to a hydrophilic treatment on the surface of the nonwoven fabric or is soaked with an oil dirt absorbing agent may be used. The area of the sheet may be preferably within a range of 90% to 100% with regard to the surface of the recessed portion of the base mat. On the back side of the nonwoven fabric, i.e., on the lower side of the sheet, a plastic film having usually a thickness of 10 to 100 µm such as polyethylene and polyester, which does not allow liquid substance to pass through, is laminated. The upper layer and the lower layer may be preferably laminated through a bonding layer. Film of, for example, polyethylene or the like having a thickness of 10 to 30 µm is caused to be heat-fused for forming the laminated structure. The portion on which the plastic film is laminated is any portion other than the portion with which the hook-and-loop fastener is in contact, and the ratio of the plastic film to the nonwoven fabric in area may be usually preferably within a range of 70% to 95%. By working in this way, the hook-and-loop fastener provided on the base mat comes into direct contact with the nonwoven fabric to fix the nonwoven fabric, and there is no possibility that the laminated film allows liquid dirt to pass through. The thickness of the sheet differs depending on the service place, and may be usually 5 mm or less.

### Brief Description of the Drawings

FIG. 1 is an exploded perspective view showing a shoes wiping mat according to the present invention, comprising a dirt absorbing sheet placed on the recessed portion of the base mat surrounded with a frame.

FIG. 2 is a sectional view showing a shoes wiping mat according to the present invention.

### Best Mode for Carrying Out the Invention

Hereinafter, with reference to the drawings, the present invention will be explained in detail.

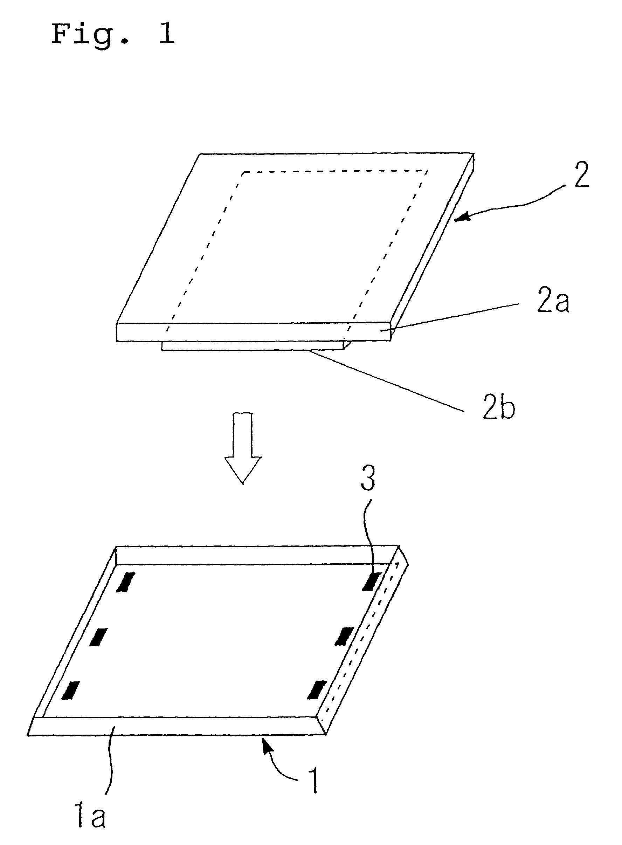

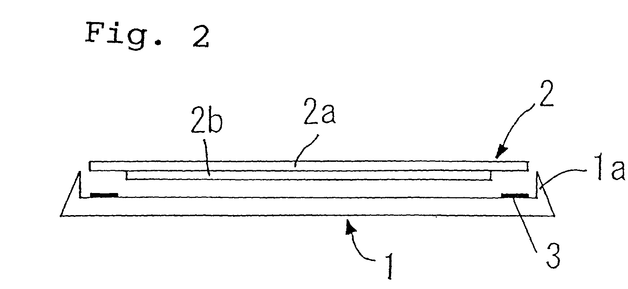

For a base mat 1 for the shoes wiping mat shown in FIGs. 1 and 2, there was used, for example, nitrile rubber having physical properties of, for example, hardness of 65°, tensile strength of 70 kgf/cm² and elongation of 250% or more. The back surface of the base mat was provided with satin patterns to obtain a slip-proof effect. Furthermore, pieces of hook-and-loop fastener 3 having a size of 50 mm x 100 mm each were adhered to the base mat at six places in total along two sides of the frame la of the base mat as shown in FIG. 1. In this respect, the same reference numeral designates the same member in FIGs. 1 and 2.

For the upper layer, there was used a nonwoven fabric 2a made of polypropylene with a thickness of 2.7 mm (the thickness was measured in accordance with the testing method specified by Japan Chemical Fiber Association, JIS L1096) which has been subjected to the hydrophilic treatment. For the lower layer, polypropylene film 2b with a thickness of 30 µm was used. Polypropylene film (not shown) with a thickness of 10 µm was interposed between them as a bonding layer, and then they were heat-fused to prepare a dirt absorbing sheet 2 having a laminated structure. In the ratio in area of the polypropylene film 2b of the lower layer to the nonwoven fabric 2a of the upper layer was 85%.

The sheet 2 was placed on the base mat 1 such that the nonwoven fabric portion protruding from the polypropylene film 2b layer comes into contact with the hook-and-loop fastener 3 on the base mat 1, thereby fixing the sheet 2.

The shoes wiping mat thus obtained was set at a predetermined place such as a gateway to a kitchen, a working room or the like. The sheet did not move even if any special sheet stopper was not provided because of the adhesion between the hook-and-loop fastener and the nonwoven fabric, and no rumples occurred. Furthermore, when one walked on the shoes wiping mat, dirt, oil and the like adhering to the shoes were absorbed by the sheet, thus preventing the dirt of the shoes from being transferred onto other places. When the sheet was torn off at a point of time where the dirt absorbed by the sheet increased and the appearance deteriorated, the sheet was able to be easily removed. Moreover, the surface of the base mat after removed did not have any dirt at all, and the surface was in the same state as before its use. Furthermore, when a new mat was placed on the base mat, a shoes wiping mat having the above-described structure was able to be easily obtained.

In order to further confirm the effect of the present invention definitely, the following comparative test was conducted.

A frame was formed on and around the base mat, and a movement-inhibiting layer (carbon sand) was provided on the recessed portion of the base mat surrounded with the frame in place of the dirt absorbing sheet, which is the feature of the present invention, to prepare a shoes wiping mat in which an absorbing sheet made of a nonwoven fabric capable of absorbing oil or dirt was placed on the upper surface of the movement-inhibiting layer. This shoes wiping mat was placed on the same place as described above. Because of the movement-inhibitor provided on the recessed portion of the base mat, the absorbing sheet hardly moved, and no rumples occurred. When, however, this absorbing sheet was torn off at a point of time where the dirt absorbed by the absorbing sheet increased and the appearance deteriorated, the dirt absorbed by the absorbing sheet made the surface of the base mat dirty through the movement-inhibitor. Onto the surface, sticky, oil-like one adhered, and moreover, the carbon sand used for the movement-inhibitor also adhered. For this reason, in order to use a new absorbing sheet, it became necessary to clean the surface of the base mat, and the operation became exceedingly troublesome.

### Industrial Applicability

A shoes wiping mat according to the present invention can be placed for use at a gateway or the like to a kitchen, a factory or the like where one enters with his or her shoes on. Since the dirt absorbing sheet is firmly fixed by the adhesion between the nonwoven fabric and the hook-and-loop fastener, the sheet does not move even if no special sheet stopper is provided, and rumples hardly occur. In addition, since a plastic film is laminated on the back surface of the sheet, the liquid dirt such as dirty water, oil or their mixture absorbed by the nonwoven fabric of the upper layer is inhibited by the plastic film layer of the lower layer, and the dirt is not allowed to pass through the sheet, thereby not making the base mat dirty. Furthermore, when one walks on a shoes wiping mat having the above-described structure, the dirt, oil and the like adhering to shoes are absorbed by the sheet, and the dirt from shoes is not transferred to other places either.

## Claims

1. A shoes wiping mat in which a frame is provided on and around a base mat and a dirt absorbing sheet is placed on a recessed portion of the base mat formed by the frame, wherein the dirt absorbing sheet has a laminated structure in which a nonwoven fabric is provided for an upper layer and a plastic film having a smaller area than the nonwoven fabric is provided for a lower layer, and a hook-and-loop fastener provided on the surface of the recessed portion of the base mat is caused to come into contact with the nonwoven fabric portion on which the plastic film of the dirt absorbing sheet is not laminated, to fix the dirt absorbing sheet to the base mat.
